**Europäisches Patentamt**

**European Patent Office**

**Office européen des brevets**

(11) Veröffentlichungsnummer: **0 088 082**
**B1**

(12) **EUROPÄISCHE PATENTSCHRIFT**

(45) Veröffentlichungstag der Patentschrift:
04.12.85

(51) Int. Cl.⁴: **H 02 M 3/28**

(21) Anmeldenummer: **82902524.6**

(22) Anmeldetag: **30.08.82**

(86) Internationale Anmeldenummer:
**PCT/CH 82/00102**

(87) Internationale Veröffentlichungsnummer:
**WO 83/00964 (17.03.83** Gazette 83/7)

(54) **SCHALTREGLER MIT MEHREREN GEREGELTEN NEBENAUSGÄNGEN.**

(30) Priorität: **05.09.81  CH 5695/81**

(43) Veröffentlichungstag der Anmeldung:
**14.09.83 Patentblatt 83/37**

(45) Bekanntmachung des Hinweises auf die Patenterteilung:
**04.12.85 Patentblatt 85/49**

(84) Benannte Vertragsstaaten:
**AT BE CH DE FR GB LI LU NL SE**

(56) Entgegenhaltungen:
**EP - A - 0 024 523**
**DE - A - 2 919 905**
**US - A - 3 889 177**

(73) Patentinhaber: **Melcher, Domenic, Ackerstrasse 56,
8610 Uster (CH)**

(72) Erfinder: **Melcher, Domenic, Ackerstrasse 56, 8610 Uster
(CH)**

(74) Vertreter: **Salgo, Reinhold Caspar, Usterstrasse 139,
CH-8621 Wetzikon 4 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine nach dem Zerhacker-Prinzip arbeitende Stromversorgungseinrichtung der im Oberbegriff des Anspruchs 1 genannten Art.

Mit den Bezeichnungen »Schaltregler«, »Schaltnetzteil«, »Chopper-Netzteil«, »DC-DC-Konverter«, »AC-DC-Konverter«, werden verschiedene Varianten einer besonderen Klasse von Stromversorgungsvorrichtungen belegt. Ihr gemeinsames Kennzeichen liegt darin, daß eine erste Gleichspannung, die üblicherweise nicht stabil und geregelt ist, mit einer Frequenz von 20—300 kHz ein- und ausgeschaltet wird, und damit einen Schaltkreis in diesem Schaltrhythmus mit Strom versorgt. Im genannten Schaltkreis sind Mittel zur Glättung der Spannung vorhanden, die gleichzeitig Energiespeicher sind, also Drosseln und Kondensatoren. Die Ausgangsspannung wird durch einen Komparator mit einer Referenzspannung verglichen, der über weitere Schaltmittel das Ein/Aus-Tastverhältnis der ersten genannten Gleichspannung so regelt, daß die erforderliche Ausgangsspannung erzielt wird. Soll die gewünschte Gleichspannung aus einem öffentlichen Wechselspannungs- oder Gleichspannungsnetz gewonnen werden, z. B. dem Telefonie-Netz, so ist im allgemeinen galvanische Trennung von Primär- und Sekundärteil erwünscht. Dann arbeitet das Schaltelement, das die erste Gleichspannung zerhackt, auf die Primärwicklung eines Transformators. Je nach der sekundärseitigen Beschaltung und der Regelung unterscheidet man hier weiter in Durchfluß- oder Sperrwandler.

Eine den Stand der Technik wiedergegebene Darstellung von Schaltreglern mit einem geregelten Ausgang findet sich in »Schaltnetzteile«, herausgegeben von J. Wüstehube im Expert Verlag, Grafenau/VDE-Verlag Berlin. Bei Schaltnetzteilen mit galvanischer Trennung und einem geregelten Ausgang führt eine Änderung der Ausgangslast zu einer Änderung des Tastverhältnisses zwischen den beiden Schaltzuständen des Schaltelementes, das die Primärwicklung des Trenntransformators mit Strom versorgt. Weist ein Schaltnetzteil im Trenntransformator mehrere Sekundärwicklungen auf, die zu je einem Stromversorgungsausgang gehören, so wird — ohne besondere Maßnahmen — lediglich derjenige Ausgang eine stabilisierte Gleichspannung aufweisen, der das Sollwert-Istwert-Vergleichssignal liefert (im Folgenden der Hauptkreis genannt); die Spannungen der anderen Ausgänge (also der Nebenkreise) werden innerhalb verhältnismäßig weiter Grenzen durch die Belastungen beeinflußt.

Eine Schaltungsanordnung mit mehreren geregelten Nebenkreisen ist aus der Zeitschrift »Powerconversion International« November/Dezember 1980 bekannt, wo in Fig. 18 eine den Stand der Technik darstellende Schaltungsanordnung gezeigt wird. Die Ausgangsspannungen $E_{02}$ bis $E_{0M}$ werden dort durch induktive Kopelung der Drosseln $L_2$ bis $L_M$ vorreguliert. Die Feinregulierung geschieht durch konventionelle Längsregler. Eine solche Schaltung ist aufwendig in Bezug auf Zahl und Größe der notwendigen Schaltelemente und hat — wegen der Längsregler — einen verhältnismäßig schlechten Wirkungsgrad, wie in der angeführten Literatur gezeigt wird.

Ein großer Teil der Eingangsleistung muß also als Verlustleistung in Form von Wärme abgeführt werden.

Ein weiterer Schaltregler mit mindestens einem geregelten Nebenausgang ist bekannt aus der EP-A1-24 523. Er besteht im wesentlichen aus einem Eintakt-Durchflußwandler, zu dem ein zweiter in Reihe geschaltet ist, beide getaktet vom gleichen Oszillator. Neben dem für Schaltregler eher schlechten Wirkungsgrad (zwei in Reihe geschaltete Regler mit je 80% Wirkungsgrad ergeben einen Gesamt-Wirkungsgrad von etwa 65%) hat die Schaltung noch den Nachteil, daß der gesamte Strom, der durch den Nebenausgang fließt, durch das Schaltelement 42 geschaltet werden muß, was entsprechende Konsequenzen in bezug auf Dimensionierung und Preis des Schaltelementes hat.

Der Erfindung liegt die Aufgabe zugrunde, eine Stromversorgungsvorrichtung der im Oberbegriff des Patentanspruches 1 genannten Art zu schaffen, die die genannten Nachteile überwindet insbesondere den des kleinen Wirkungsgrades. Diese Aufgabe wird durch die im kennzeichnenden Teil des Patentanspruches 1 angeführten Merkmale gelöst.

Anhand der Zeichnungen wird der Erfindungsgedanke näher erläutert.

Es zeigen

Fig. 1 eine erfindungsgemäße Stromversorgungseinrichtung in der Ausführung als Eintakt-Durchflußwandler, teilweise in Blockschemadarstellung,

Fig. 2 ein ausführliches Schaltbeispiel einer erfindungsgemäßen Stromversorgungsvorrichtung, in der Ausführung als Eintakt — Durchflußwandler,

Fig. 3 den zeitlichen Spannungsverlauf an einem bestimmten Punkt der in Fig. 2 gezeigten Schaltung,

Fig. 4 ein weiteres Ausführungsbeispiel einer erfindungsgemäßen Stromversorgungsvorrichtung in der Ausführung als Eintakt-Sperrwandler, teilweise in Blockschemadarstellung,

Fig. 5 ein Nebenkreis der Darstellung von Fig. 4 in ausführlicher Darstellung,

Fig. 6 eine erfindungsgemäße Stromversorgungsvorrichtung in der Ausführung als galvanisch gekoppelter Gleichspannungswandler,

Fig. 7 eine erfindungsgemäße Stromversorgungsvorrichtung in der Ausführung als Eintakt-Durchflußwandler, bei dem zwei Sekundärkreise galvanisch gekoppelt sind, so daß der eine die erste Gleichspannung für den zweiten liefert,

Fig. 8 eine erfindungsgemäße Stromversorgungsvorrichtung in der Ausführung als Gegentakt-Durchflußwandler.

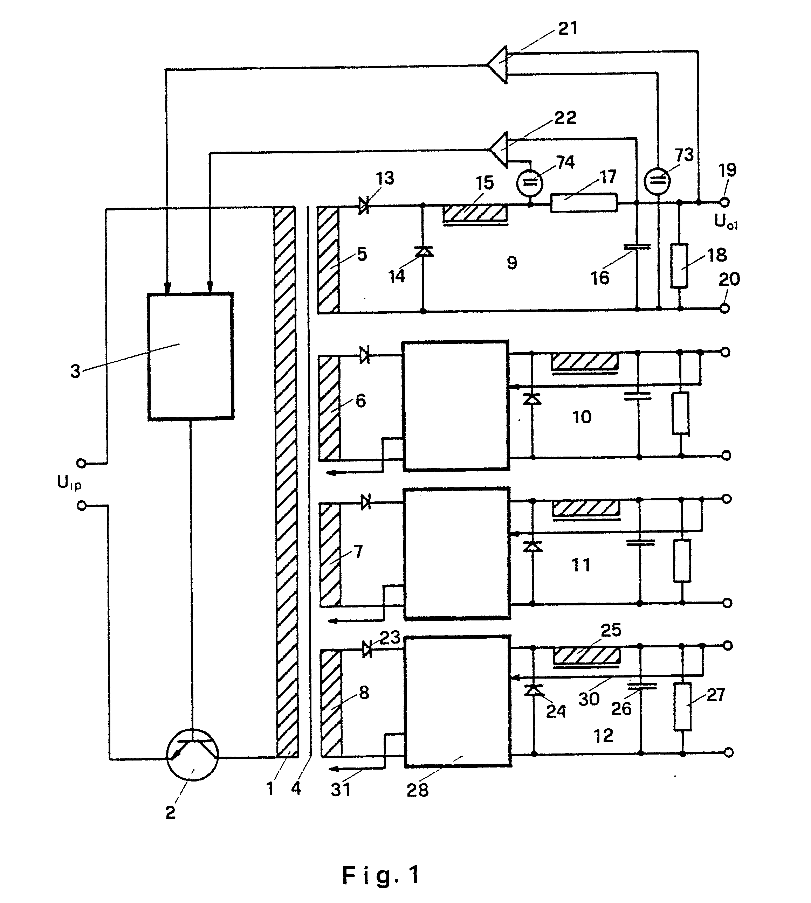

Im Eintakt-Durchflußwandler gemäß Fig. 1 ist mit 1 die Primärwicklung eines Trenntransformators 4 bezeichnet. Sie wird gespeist von einer nicht dargestellten Stromquelle der Spannung $U_{ip}$ der ersten Gleichspannung.

Ein Schaltelement 2, hier ein Bipolar Transistor, schaltet die genannte Stromquelle periodisch auf die Primärwicklung 1 mit einer Frequenz von beispielsweise 30 kHz, die von einem Oszillator stammt, der in einer Steuerschaltung 3 enthalten ist. An der Primärwicklung liegt damit annähernd eine Rechteckspannung, die entweder die Werte 0 oder $U_{ip}$ aufweist. Das Tastverhältnis ist das Verhältnis von Einschaltdauer zur Gesamtdauer der Schaltperiode. Dieses Tastverhältnis bestimmt die auf die Sekundärseite des Transformators 4 übertragene Leistung. Sekundärseitig weist der Transformator vier Sekundärwicklungen 5, 6, 7, 8 auf, die den Hauptkreis 9 und drei Nebenkreise 10, 11, 12 speisen. Der Hauptkreis 9, bestehend aus der genannten Sekundärwicklung 5, einer Gleichrichterdiode 13, einer Freilaufdiode 14, einer Drossel 15, einer Speicherkapazität 16, einem Meßwiderstand 17, und einer Vorlast 18 ist an sich bekannt und stellt den Stand der Technik dar. Die Regelung der zwischen den Klemmen 19, 20 anliegenden Spannung $U_{01}$ geschieht in ebenfalls bekannter Art, in dem in einer Regelschaltung 21 die Spannung $U_{01}$ mit der Spannung einer Referenzspannungsquelle 73 verglichen und aus dem Vergleich ein Steuersignal erzeugt wird. Dieses Steuersignal wird — in an sich bekannter Weise — entweder direkt, oder bei galvanischer Trennung beispielsweise über einen Signaltransformator oder einen Opto-Koppler an die Steuerschaltung 3 zurückgeführt und steuert so das Tastverhältnis der Spannung $U_{ip}$. Eine bekannte Art der Kurzschlußsicherung besteht darin, daß der vom Sekundärkreis 9 gelieferte Strom den Meßwiderstand 17 durchfließen muß und darüber einen Spannungsabfall erzeugt, der einer Vergleichsschaltung 22 zugeführt wird. Wird ein vorgegebener Strom — und damit eine vorgegebene Spannung an den Eingängen der Vergleichsschaltung 22 — überschritten, so sendet die Vergleichsschaltung 22 ein entsprechendes Signal an die Steuerschaltung 3, die darauf das Tastverhältnis nach Maßgabe der gewünschten Kurzschluß-Kennlinie reduziert. Die drei weiteren Sekundärwicklungen 6, 7, 8 speisen die drei untereinander gleichartigen Nebenkreise 10, 11, 12.

Ein solcher Nebenkreis, beispielsweise der mit 12 bezeichnete, besteht aus der Sekundärwicklung 8, einer Gleichrichterdiode 23, einer Freilaufdiode 24, einer Drossel 25, einer Speicherkapazität 26 und einer Vorlast 27, die hier durch einen Widerstand gebildet wird. Ferner ist erfindungsgemäßer Bestandteil dieses Nebenkreises die Regelschaltung 28, die über eine Leitung 30 die Information über die Ausgangsspannung des Nebenkreises 12 empfängt, und die über eine weitere Leitung 31 ein Signal an die Steuerschaltung 3 übermittelt, wenn der vom Nebenkreis 12 gelieferte Strom eine bestimmte Größe überschreitet (Kurzschluß-Sicherung).

Ist galvanische Trennung von der Steuerschaltung 3 erforderlich, so wird sie wieder beispielsweise durch einen (nicht dargestellten) Signaltransformator oder einen Opto-Koppler vorgenommen.

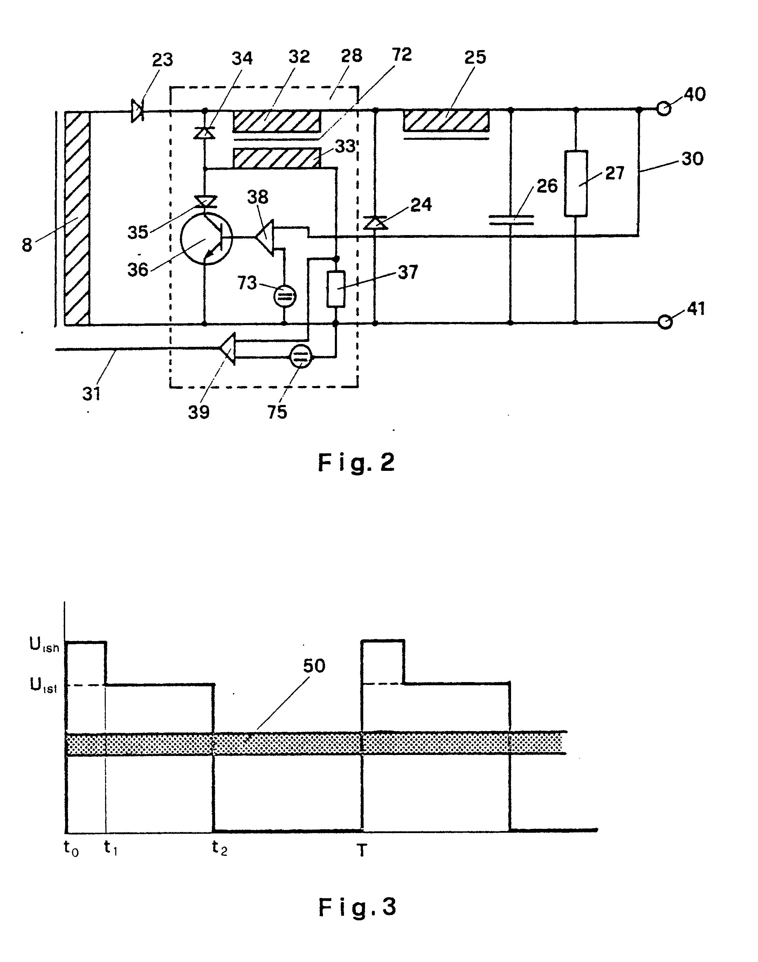

In Fig. 2 ist der Nebenkreis 12 gesondert dargestellt, der an zwei Ausgangsklemmen 40, 41 eine ebenfalls geregelte Gleichspannung abgibt. Die Regelschaltung 28 ist dabei in ihren Elementen ausführlich dargestellt. Sie enthält einen aus Wicklungen 32 und 33 bestehenden Transformator 72, zwei Dioden 34, 35, ein Schaltelement 36, einen Meßwiderstand 37 und zwei Komparatorschaltungen 38, 39 mit Referenzspannungsquellen 73, 75. Die Funktion der außerhalb der Regelschaltung 28 liegenden Schaltelemente ist die gleiche wie im Hauptkreis 9 gemäß Fig. 1. Da die Regelschaltung 28 keine Energie speichern kann, ist die Sekundärwicklung 8 so ausgelegt, daß der von ihr abgegebene Spannungs-Zeitmittelwert (nach der Gleichrichter-Diode 23 gemessen) um einen bestimmten Bruchteil — beispielsweise 30% — größer ist, als der zwischen den Ausgangsklemmen 40, 41 gewünschte Wert der geregelten Gleichspannung. Ist das Schaltelement 2 gemäß Fig. 1 leitend, so steigt der Strom an, der im Nebenkreis 12 fließt und die Speicherkapazität lädt. Dieser Stromanstieg induziert in der Wicklung 33 einen Strom. Ist das Schaltelement 36 leitend, so fließt der induzierte Strom über die Diode 35, das Schaltelement 36 und den Meßwiderstand 37 in die Wicklung 33 zurück. Der Spannungsabfall über dem Meßwiderstand wird klein gehalten, so daß in diesem Schaltzustand die Wicklung 33 des Transformators im wesentlichen kurzgeschlossen ist.

Ist das Windungszahlverhältnis zwischen der Wicklung 33 und der Wicklung 32 beispielsweise 4 : 1, so ist in der genannten Schaltsituation die Rückwirkung des induzierten Stromes auf die Wicklung 32 der um den Faktor 4 reduzierte Spannungsabfall über die genannten Elemente 35, 36, 37. Ist das Schaltelement 36 jedoch im gesperrten Zustande, so fließt der in der Wicklung 33 induzierte Strom — mit dem genannten Windungszahlverhältnis ist das $1/4$ des durch die Wicklung 32 fließenden Stromes — in die Quelle zurück, beziehungsweise reduziert den aus der Sekundärwicklung 8 fließenden Strom. Die nach der Wicklung 32 verfügbare Spannung ist also um etwa 25% reduziert.

Es ist im Erfindungsgedanken ebenfalls enthalten, die Nebenkreise ohne Kurzschluß-Sicherung, und damit ohne den Meßwiderstand 37 zu bauen. Ebenfalls erfindungsgemäß ist der Einbau des Meßwiderstandes 37 in den Hauptstromkreis des Nebenkreises gemäß Fig. 2, beispielsweise analog zum Meßwiderstand 17 in Fig. 1.

In Fig. 3 ist der zeitliche Verlauf der Spannung nach der Wicklung 32 dargestellt. $U_{ish}$ ist die an

der Sekundärwicklung 8 verfügbare Spannung, $U_{isl}$ ist der, um die in Wicklung 33 induzierte Spannung reduzierte Wert. Mit $t_0$ ist der Anfang eines Taktes des Schaltelementes 2 bezeichnet, mit T das Ende eines solchen Taktes, das zugleich der Anfang des nächsten bildet. Zur Zeit $t_0$ ist das Schaltelement 36 leitend und bleibt in diesem Zustande bis zu einem mit $t_1$ bezeichneten Zeitpunkt, wo es in den sperrenden Zustand getrieben wird. Dies wird von der Komparatorschaltung 38 gemäß Fig. 2 bewirkt, die die zwischen den Ausgangsklemmen 40, 41 anliegende Spannung mit derjenigen einer Referenzspannungsquelle 73 vergleicht und daraus mittels Plusbreiten-Modulation das Verhältnis zwischen Einschalt- und Sperrzeit des Schaltelementes 36 definiert.

In Fig. 3 ist mit 50 ein Band in der Spannungs-Zeit-Fläche bezeichnet, welches die volle Regelbreite des Nebenkreises 12 angibt. Der Komparator 39 mißt den Spannungsabfall über dem Meßwiderstand 37 und vergleicht ihn mit der Spannung einer Referenzspannungsquelle 75. Bei Überschreiten einer vorgewählten Schwelle wird auf der Leitung 31 an die Steuerschaltung 3 ein Signal übermittelt, das das Schaltelement 2 sperrt. Da der Spannungsabfall über dem Meßwiderstand 37 proportional dem Strom im Nebenkreis 12 ist, ist so auch dieser Nebenkreis 12 kurzschlußgesichert. Die Funktion des Komparators 39 entspricht exakt derjenigen der Vergleichsschaltung 22 gemäß Fig. 1.

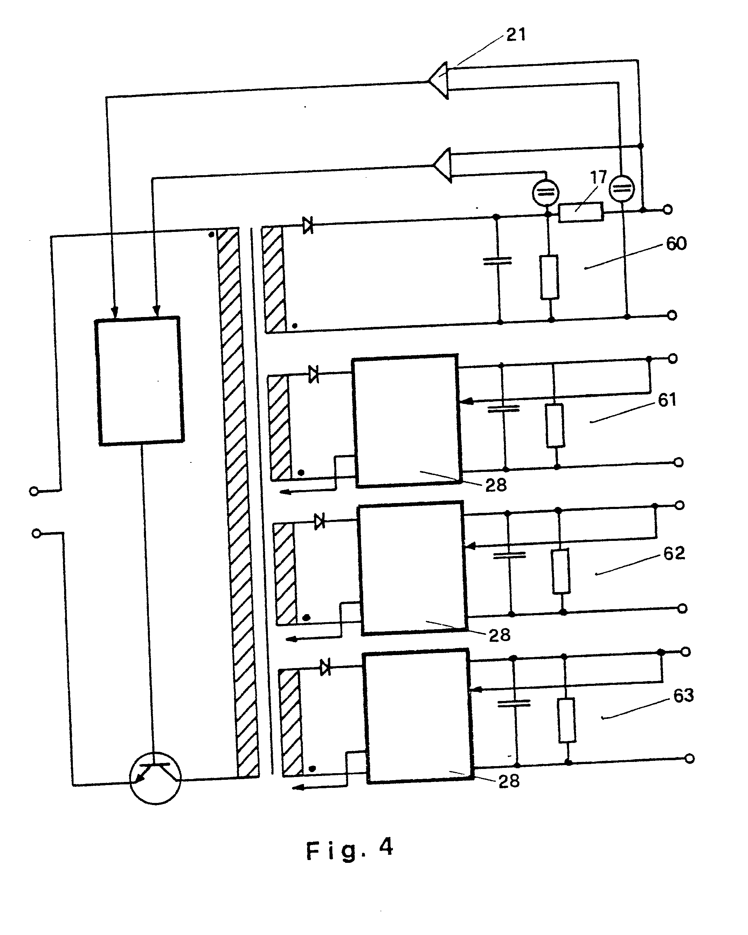

Fig. 4 zeigt einen Eintakt-Sperrwandler in erfindungsgemäßer Ausführung. Wieder existiert ein Hauptkreis, hier mit 60 bezeichnet und drei Nebenkreise 61, 62, 63 die im vorliegenden Ausführungsbeispiel sowohl untereinander, als auch von der Primärseite galvanisch getrennt sind. Die Regelung des Hauptkreises 60 erfolgt wie im Ausführungsbeispiel gemäß Fig. 1 über den Regelkreis 21; eine Überstromsicherung ist ebenfalls hier vorgesehen und funktioniert wie zu Fig. 1 beschrieben mit dem Spannungsabfall über den Meßwiderstand 17.

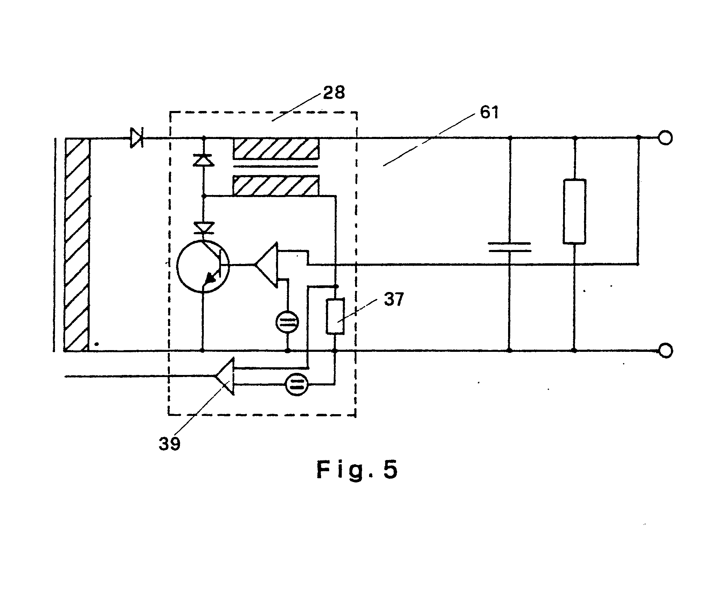

Entsprechend der Regelschaltung 28 von Fig. 1 sind auch die Regelschaltungen 28 in Fig. 4 in die Nebenkreise 61, 62, 63 eingeschaltet. Ihre Beschaltung ist anhand von Fig. 5 verdeutlicht, aber völlig identisch mit der in Fig. 2 gezeigten. Es ist auch hier im Erfindungsgedanken enthalten, den Meßwiderstand 37, und damit natürlich auch den Komparator 39 wegzulassen. Ebenfalls erfindungsgemäß ist es, den Meßwiderstand in den Hauptstromkreis einzubauen und den Spannungsabfall darüber zu überwachen.

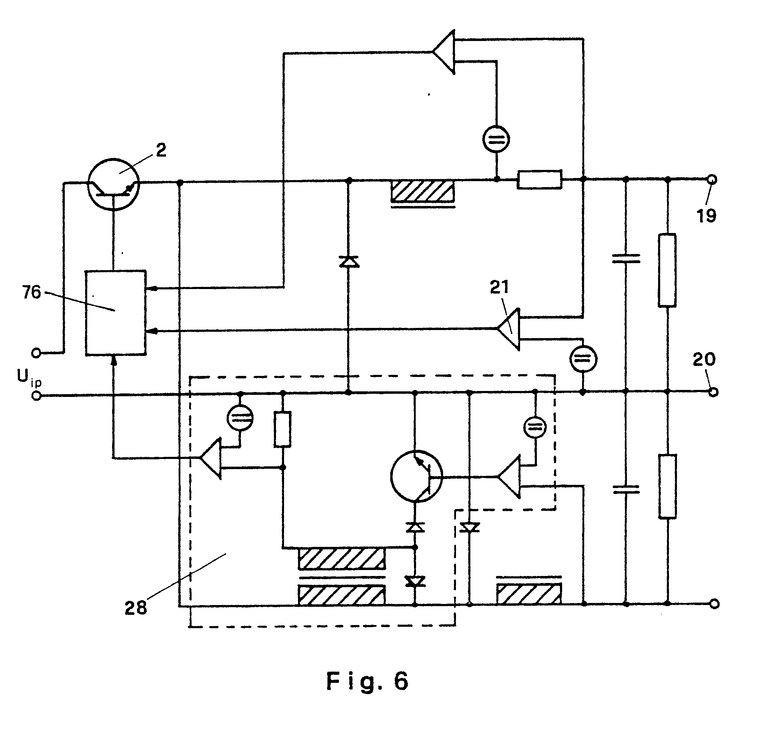

Fig. 6 zeigt einen Gleichspannungswandler mit galvanischer Verbindung von Primär- und Sekundärseite. Die Primärseite kann dabei ein Netzgleichrichter mit Glättungskondensator oder eine stabilisierte Gleichspannung sein. Mit $U_{ip}$ ist hier der Momentanwert dieser Eingangsgleichspannung bezeichnet. Das Schaltelement 2, hier ein Bipolartransistor wie in Fig. 1, schaltet die Spannung $U_{ip}$ ein und aus mit einem Tastverhältnis, das durch die Regelschaltung 21 aus der zwischen den Klemmen 19, 20 herrschenden Spannung definiert wird. Angesteuert wird das Schaltelement 2 von einer Steuerschaltung 76, die auch den — nicht gesondert gezeichneten — Taktgeber enthält. Die übrige Beschaltung dieses Hauptkreises ist die gleiche wie diejenige gemäß Fig. 1. Der hier gezeigte Nebenkreis ist anstatt auf eine separate Transformatorenwicklung direkt auf das Schaltelement 2 geschaltet. Der Inhalt der Regelschaltung 28 ist wiederum identisch mit jener der Figuren 1, 2, 4 und 5. Sowohl im Haupt- als auch im Nebenkreis kann die Überstromsicherung weggelassen oder in den Hauptstromkreis verlegt werden, ohne den Erfindungsgedanken zu verlassen.

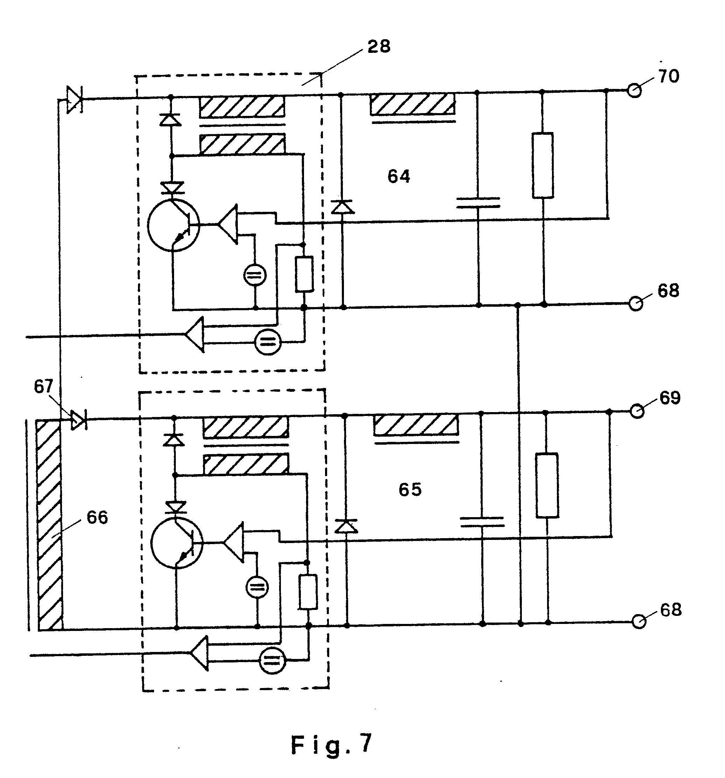

Im Ausführungsbeispiel gemäß Fig. 7 ist ein Nebenkreis 64 parallel geschaltet zu einem Nebenkreise 65. Beide Nebenkreise 64, 65 werden von der gleichen Sekundärwicklung 66 und einer in Serie dazu geschalteten Gleichrichterdiode 67 gespeist. Zwei Regelschaltungen 28 stabilisieren die Spannung zwischen Klemmen 68 und 69 bzw. Klemmen 68 und 70. Die Regelschaltungen sind wieder identisch mit den bereits erläuterten Regelschaltungen, die die gleiche Nummer tragen.

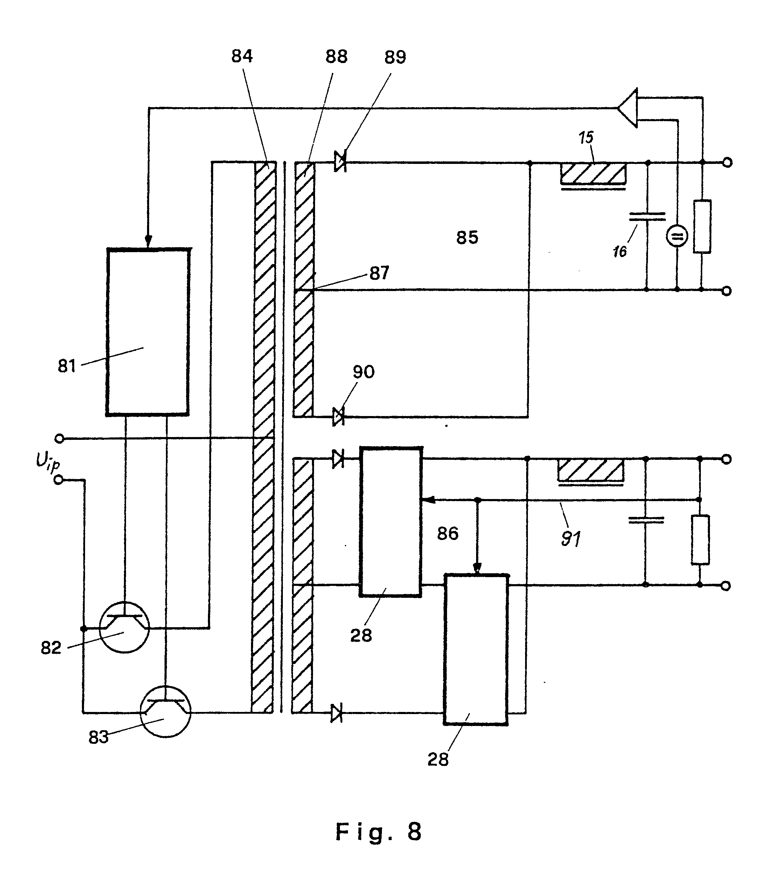

Das Ausführungsbeispiel gemäß Fig. 8 beruht auf einem Gegentakt-Durchfluß-Wandler. Primärseitig besteht dieser aus einer — nicht dargestellten — Stromquelle der Spannung $U_{ip}$, einer Steuerschaltung 81, zwei Schalterelementen 82, 83, die im Gegentakt auf je eine Hälfte einer Primärwicklung 84 arbeiten. Sekundärseitig besteht der Wandler aus einem Hauptkreis 85 und — beispielsweise — einem Nebenkreis 86. Über entsprechend gepolte Dioden 89, 90 sind beide Enden der Sekundärwicklung 88 mit der Speicherdrossel 15 verbunden, die den geglätteten Strom dem Kondensator 16 zuleitet. Die Funktion der Regelschaltung ist die gleiche, wie in Fig. 1. Eine Kurzschluß-Sicherung, wie bei den vorangehenden Ausführungsbeispielen ist hier beispielsweise nicht vorgesehen.

Der Nebenkreis 86 enthält zwei Regelschaltungen 28 mit gleichem inneren Aufbau wie in Fig. 2 gezeigt; mit der Ausnahme, daß auch hier auf Kurzschluß-Sicherung verzichtet wurde. Die Information über die Ausgangsspannung des Nebenkreises 86 wird den Regelschaltungen 28 durch eine Leitung 91, entsprechend der Leitung 30 von Fig. 1, zugeführt.

**Patentansprüche**

1. Schaltregler mit einem ersten Schaltelement (2), das den Strom sowohl in einem Hauptkreis als auch in mindestens einem parallel zum Hauptkreis gespeisten Nebenkreis durch Pulsbreitenmodulation steuert, wobei jeder Nebenkreis (10, 11, 12) eine zusätzliche Regelschaltung (28) aufweist, durch die eine Beeinflussung der Stromimpulse im Nebenkreis entsprechend den Ausgangssignalen eines Komparatores (38) erfolgt, in welchem die Ausgangsspannung des Nebenkreises mit der Spannung einer Referenzspannungsquelle (73) verglichen wird, dadurch gekennzeichnet, daß in jedem Nebenkreis ein Transformator (72) vorgesehen ist, dessen vom Impulsstrom durchflossene Primärwicklung (32) in einer zur ersten Ausgangsklemme (40) des Schaltreglers führenden Leitung liegt und dessen Sekundärwicklung (33) mit einem Ende an die zweite Ausgangsklemme (41) geführt ist, während das andere Ende der Sekundärwicklung (33) einerseits über eine Diode (35) und ein weiteres Schaltelement (36) ebenfalls an die zweite Ausgangsklemme (41) angeschlossen ist und andererseits über eine Rückspeisediode (34) an das von der ersten Ausgangsklemme (40) abgewandte Ende des Transformators (72) geführt ist, wobei das weitere Schaltelement (36) vom Ausgang des Komparators (38) gesteuert wird.

2. Schaltregler nach Anspruch 1, dadurch gekennzeichnet, daß in der zusätzlichen Regelschaltung (28) zusätzlich ein Meßwiderstand (37) und ein Komparator (39) mit Referenzspannungsquelle (75) vorhanden ist, wobei der Meßwiderstand (37) in Serie zur Sekundärwicklung (33) des Transformators (72) geschaltet ist, die Seite der Sekundärwicklung (33), die mit dem Meßwiderstand (37) verbunden ist, gleichzeitig auch mit dem einen Eingang des Komparators (39) verbunden ist, während sein anderer Eingang über die Referenzspannungsquelle (75) mit der Leitung verbunden ist, auf der auch die zweite Ausgangsklemme (41) liegt, und der Ausgang des Komparators (39) mittels einer Leitung (31) mit der Primärseite des Schaltreglers verbunden ist und auf ihr ein Signal zur Reduktion des Tastverhältnisses des ersten Schaltelementes (2) übermittelt, falls der Spannungsabfall über dem Meßwiderstand (37) die von der Referenzspannungsquelle (75) abgegebene Spannung überschreitet.

3. Schaltregler nach Anspruch 1, dadurch gekennzeichnet, daß ein Meßwiderstand außerhalb der Regelschaltung (28) in den Stromkreis des Nebenkreises unmittelbar vor der ersten Ausgangsklemme (40) eingeschaltet ist, daß die erste Ausgangsklemme (40) mit dem einen Eingang eines Komparators verbunden ist, dessen anderer Eingang über eine Referenzspannungsquelle vom anderen Ende des Meßwiderstandes gespeist wird, wobei der Ausgang des Komparators mittels einer Leitung mit der Primärseite des Schaltreglers verbunden ist und auf ihr ein Signal zur Reduktion des Tastverhältnisses des ersten Schaltelementes (2) übermittelt, falls der Spannungsablauf über dem Meßwiderstand die von der Referenzspannungsquelle abgegebene Spannung überschreitet.

4. Schaltregler nach Anspruch 1 oder 2 oder 3, dadurch gekennzeichnet, daß das Schaltelement (36) ein Bipolartransistor ist.

5. Schaltregler nach Anspruch 1 oder 2 oder 3, dadurch gekennzeichnet, daß das Schaltelement (36) ein MOSFET ist.

6. Schaltregler nach Anspruch 2 oder 3, dadurch gekennzeichnet, daß die Leitung (31) direkt mit der Primärseite des Schaltreglers verbunden ist.

7. Schaltregler nach Anspruch 2 oder 3, dadurch gekennzeichnet, daß die Leitung (31) über einen Trenn-Transformator mit der Primärseite des Schaltreglers verbunden ist.

8. Schaltregler nach Anspruch 2 oder 3, dadurch gekennzeichnet, daß die Leitung (31) über einen Opto-Koppler mit der Primärseite des Schaltreglers verbunden ist.

**Claims**

1. Switched mode power supply with at least one regulated secondary circuit characterized in that it is comprising a regulation circuit (28) in every one of the secondary circuits, which regulation circuit (28) is comprising each at least the following elements: a transformer (72), two diodes (34, 35), a switching element (36), a comparator circuit (38) with reference source (73) and means for pulse-width modulation, which is further characterized in that the primary coil (32) of the transformer (72) in the main current path is connected in series to a rectifier diode (23) of the secondary circuit, that one end of the secondary coil (33) of the transformer (72) is connected to the primary coil (32) and the diode (23) via the diode (34), that the one end of the diode (35) is also connected with the said end of the secondary coil (33) whereas the other end of the diode (35) is connected to one current port of the switching element (36), that the other current port of the switching element (36) is connected to the same lead as the other end of the secondary coil (33) to wich lead is connected also the output connector (41), that one entrance of the comparator circuit (38) is connected directly to the other output connector (40), the other entrance of comparator circuit (38) is connected to the output connector (41) via the reference source (73), whereas its outlet is connected to the signal part of the switching element (36).

2. Switched mode power supply according to claim 1, characterized in that the regulation circuit (28) additionally contains a measuring resistor (37) and a comparator circuit (39) with a reference source (75) where the measuring resistor (37) is connected in series to the secondary coil (33) of the transformer (72), whereas the one end of the secondary coil (33) which is connected the measuring resistor (37) is also connected to one entrance of the comparator (39), whilst its other entrance is connected the output connector (41) via the reference source (75), that the outlet of the comparator (39) is connected to the primary side of the switched mode power supply by means of a lead (31) on wich a signal is transmitted in order to duce the keying ratio of the switching element (2) in case the voltage drop across the measuring resistor (37) is exceeding the voltage of the reference source (75).

3. Switched mode power supply according to claim 1, characterized in that a measuring resistor (37) is wired outside of the regulation circuit (28) in the main current path of the secondary circuit immediately adjacent to the output connector (40),

that this output connector (40) is connected to the one entrance of a comparator circuit (39), that the other entrance of the comparator circuit (39) is fed by the other end of the measuring resistor (37) via a reference source (75), whereas the outlet of the comparator circuit (39) is connected to the primary side of the switched mode power supply by means of a lead (31) on which a signal is transmitted in order to reduce the keying ratio of the switching element (2) in case the voltage drop across the measuring resistor (37) is exceeding the voltage of the reference source (75).

4. Switched mode power supply according to claims 1, or 2, or 3, characterized in that the switching element (36) is a bipolar transistor.

5. Switched mode power supply according to claims 1, or 2, or 3, characterized in that the switching element (36) is a MOSFET.

6. Switched mode power supply according to claims 2, or 3, characterized in that the lead (31) is connected directly to the primary side of the switched mode power supply.

7. Switched mode power supply according to claims 2, or 3, characterized in that the lead (31) is connected to the primary side of the switched mode power supply via an insulation transformer.

8. Switched mode power supply according to claims 2, or 3, characterized in that the lead (31) is connected to the primary side of the switched mode power supply via an optical coupling device.

## Revendications

1. Régulateur de commutation comportant un premier élément de commutation (2) qui, au moyen d'une modulation d'impulsions en largeur, régule le courant aussi bien dans un circuit principal que dans au moins un circuit secondaire alimenté en parallèle avec le circuit principal, chaque circuit secondaire (10, 11, 12) comportant un circuit de réglage auxiliaire (28), qui permet d'influer sur les impulsions de courant dans le circuit secondaire en fonction des signaux de sortie d'un comparateur (38) dans lequel la tension de sortie du circuit secondaire est comparée à la tension d'une source de tension de référence (73), caractérisé en ce que, dans chaque circuit secondaire, il est prévu un transformateur (72), dont l'enroulement primaire (32) parcouru par le courant impulsionnel est situé dans une ligne aboutissant à la première borne de sortie (40) du régulateur de commutation et dont l'enroulement secondaire (33) est relié par une extrémité à la seconde borne de sortie (41), tandis que l'autre extrémité de l'enroulement secondaire (33) est raccordée, d'une part par l'intermédiaire d'une diode (35) et d'un second élément de commutation (36), également à la seconde borne de sortie (41) et, d'autre part par l'intermédiaire d'une diode d'alimentation de retour (34) à l'extrémité du transformateur (72), située à l'opposé de la première borne de sortie (40), le second élément de commutation (36) étant commandé par la sortie du comparateur (38).

2. Régulateur de commutation selon la revendication 1, caractérisé en ce que, dans le circuit de réglage auxiliaire (28), il est prévu en supplément une résistance de mesure (37) et un comparateur (39) possédant une source de tension de référence (75), la résistance de mesure (37) étant branchée en série avec l'enroulement secondaire (33) du transformateur (72), en ce que le côté de l'enroulement secondaire (33), qui est relié à la résistance de mesure (37), est raccordé simultanément à l'une des entrées du comparateur (39), tandis que son autre entrée est reliée, par l'intermédiaire de la source de tension de référence (75), à la ligne dans laquelle se trouve également située la seconde borne de sortie (41), et en ce que la sortie du comparateur (39) est reliée, par l'intermédiaire d'une ligne (31), au côté primaire du régulateur de commutation et lui transmet un signal servant à réduire le taux d'impulsions du premier élément de commutation (2), dans le cas où la chute de tension aux bornes de la résistance de mesure (37) dépasse la tension délivrée par la source de tension de référence (75).

3. Régulateur de commutation selon la revendication 1, caractérisé en ce qu'une résistance de mesure est branchée à l'extérieur du circuit de réglage (28) dans la branche de courant du circuit secondaire, directement en amont de la première borne de sortie (40), en ce que la première borne de sortie (40) est reliée à l'une des entrées d'un comparateur dont l'autre entrée est alimentée, à travers une source de tension de référence, par l'autre extrémité de la résistance de mesure, la sortie du comparateur étant reliée, au moyen d'une ligne, au côté primaire du régulateur de commutation tout en lui transmettant un signal visant à réduire le taux d'impulsions du premier élément de commutation (2) dans le cas où la chute de tension aux bornes de la résistance de mesure dépasse la tension délivrée par la source de tension de référence.

4. Régulateur de commutation selon la revendication 1 ou 2 ou 3, caractérisé en ce que l'élément de commutation (36) est un transistor bipolaire.

5. Régulateur de commutation selon la revendication 1 ou 2 ou 3, caractérisé en ce que l'élément de commutation (36) est un transistor MOSFET.

6. Régulateur de commutation selon la revendication 2 ou 3, caractérisé en ce que la ligne (31) est reliée directement au côté primaire du régulateur de commutation.

7. Régulateur de commutation selon la revendication 2 ou 3, caractérisé en ce que la ligne (31) est reliée, par l'intermédiaire d'un transformateur ·séparateur, au côté primaire du régulateur de commutation.

8. Régulateur de commutation selon la revendication 2 ou 3, caractérisé en ce que la ligne (31) est reliée, par l'intermédiaire d'un optocoupleur, au côté primaire du régulateur de commutation.

Fig. 1

Fig. 2

Fig. 3

Fig. 4

**Fig. 5**

Fig. 6

Fig. 7

Fig. 8